# EUROPEAN PATENT APPLICATION

(11) **EP 4 835 017 A1**
(43) Date of publication of application: **04.11.2026**
(21) Application number: 24912104.7
(22) Date of filing: 20.11.2024
(51) Int. Cl.: C09D 11/30, B41J 2/01, B41M 5/00

(54) **POLYMER PARTICLE-CONTAINING AQUEOUS DISPERSION FOR INK**

(30) Priority: 25.12.2023 JP 2023218604
(71) Applicant: Nippon Shokubai Co., Ltd., Osaka-shi, Osaka 541-0043 (JP)
(72) Inventor: ITO, Takumi, Suita-shi, Osaka 564-0034 (JP)
(74) Representative: Müller-Boré & Partner Patentanwälte PartG mbB
(86) International application number: PCT/JP2024/041101
(87) International publication number: WO 2025/142211

(57) **Abstract**

An object is to provide an aqueous dispersion that can impart high adhesion to a PET film and an OPP film and good viscosity stability to an aqueous ink. The above-described object can be solved by an aqueous dispersion for ink, the aqueous dispersion including polymer particles containing a polymer (A), the polymer (A) having: a content of a structural unit derived from an aromatic group-containing monomer of from 18 to 42 mass% and a weight average molecular weight of from 50000 to 100000.

## Description

### Technical Field

The present invention relates to an aqueous dispersion for ink containing polymer particles, an aqueous ink containing the aqueous dispersion, and a printed article obtained using the aqueous ink.

### Background Art

Inks are roughly classified into two types of inks: organic solvent-based inks in which an organic solvent is used as a main component of a solvent; and aqueous inks in which water is used as a main component of a solvent, and the aqueous inks have been attracting attention in recent years from the viewpoint of environmental considerations.

In addition, the polymer contained in the ink has to exhibit adhesion to a substrate to be printed, and has to widely adhere not only to a water-absorbing substrate such as paper but also to a non-water-absorbing substrate such as a resin film.

For example, Patent Document 1 discloses a water-based ink that has a copolymer (P) containing a constitutional unit (A) derived from acrylonitrile and a constitutional unit (S) derived from styrene, and describes that when the glass transition temperature of the copolymer (P) is adjusted to from 50 to 120°C and the content of the constitutional unit (A) derived from acrylonitrile in the copolymer (P) is adjusted to from 8 to 50 mass% in all constitutional units of the copolymer (P), the adhesion to a resin film composed of polyvinyl chloride is excellent.

### Citation List

### Patent Document

Patent Document 1: JP 2023-62882 A

### Summary of Invention

### Technical Problem

Although it is described that the water-based ink that has the copolymer (P) described in Patent Document 1 can be applied to various resin films, but cannot exhibit excellent adhesion to both resin films having significantly different polarities such as a polyethylene terephthalate (PET) film and an oriented polypropylene (OPP) film with one ink.

Furthermore, the water-based ink has to have a small amount of increased viscosity even when stored for a long period of time, that is, to have good viscosity stability. This is because, when an aqueous ink having poor viscosity stability is used as an aqueous ink for inkjet, there is a concern that the viscosity of the ink after storage may deviate from the appropriate viscosity range of a printer head, and ink droplets are not normally discharged.

Accordingly, an object of the present invention is to provide an aqueous dispersion that can impart high adhesion to a PET film and an OPP film and good viscosity stability to an aqueous ink.

### Solution to Problem

As a result of intensive studies to solve the above-described issues, the present inventors have found that when an aqueous dispersion that contains polymer particles composed of a polymer in which a content of a structural unit derived from an aromatic group-containing monomer and a weight average molecular weight are adjusted to specific ranges, high adhesion to a PET film and an OPP film and good viscosity stability can be imparted to an aqueous ink, and have completed the present invention.

That is, the present invention is as follows.
[1] An aqueous dispersion for ink, the aqueous dispersion containing polymer particles composed of a polymer (A), the polymer (A) having from 18 to 42 mass% of a structural unit derived from an aromatic group-containing monomer, and a weight average molecular weight of the polymer (A) being from 50000 to 100000.
[2] The aqueous dispersion for ink according to [1], wherein the aromatic group-containing monomer is a monomer having: at least one benzene ring or naphthalene ring; and at least one polymerizable unsaturated group in a molecule.
[3] The aqueous dispersion for ink according to [1] or [2], wherein the polymer (A) further contains a structural unit derived from a hydroxyl group-containing monomer, and
   a content of the structural unit derived from a hydroxyl group-containing monomer is from 30 to 150 parts by mass per 100 parts by mass of the structural unit derived from an aromatic group-containing monomer.
[4] The aqueous dispersion for ink according to [3], wherein the hydroxyl group-containing monomer is a monomer having at least one hydroxyl group and at least one (meth)acryloyl group in a molecule.
[5] The aqueous dispersion for ink according to any of [1] to [4], wherein the polymer (A) further contains a structural unit derived from a cyclic aliphatic group-containing monomer, and
   a content of the structural unit derived from a cyclic aliphatic group-containing monomer is from 60 to 180 parts by mass per 100 parts by mass of the structural unit derived from an aromatic group-containing monomer.
[6] The aqueous dispersion for ink according to [5], wherein the cyclic aliphatic group-containing monomer is a monomer having at least one alicyclic hydrocarbon ring and at least one polymerizable unsaturated group in a molecule, and
   the alicyclic hydrocarbon ring includes a cycloalkyl group, an isobornyl group, or an adamantyl group.
[7] The aqueous dispersion for ink according to any of [1] to [6], wherein a glass transition temperature of the polymer (A) is from -10 to 75°C.
[8] The aqueous dispersion for ink according to any of [1] to [7], wherein an acid value of the polymer (A) is 10 mg KOH/g or less.
[9] An aqueous ink, containing: the aqueous dispersion for ink described in any of [1] to [8]; and a colorant.
[10] The aqueous ink according to [9], wherein the colorant includes a white pigment.
[11] A printed article, including a printed layer including the aqueous ink described in [9] or [10].
[12] A method for producing an aqueous ink, the method including using the aqueous dispersion described in any of [1] to [8].

### Advantageous Effects of Invention

Use of the aqueous dispersion of the present invention makes it possible to impart high adhesion to a PET film and an OPP film and good viscosity stability to an aqueous ink.

### Description of Embodiments

An embodiment of the present invention will be described below, but the present invention is not limited thereto. In the present specification, a numerical range described as "from A to B" means "A or more and B or less" unless otherwise specified. Furthermore, the term "(meth)acrylic acid" means acrylic acid or methacrylic acid, and the term "(meth)acrylate" means acrylate or methacrylate. The same applies to terms such as "(meth)acryloxy" and "(meth)acryloyl". Moreover, the "structural unit derived from a predetermined monomer" corresponds to a structure obtained by replacing a carbon-carbon double bond contained in the predetermined monomer with a carbon-carbon single bond and two bonds bonded to the respective carbon atoms. The structure may be a structure obtained by polymerizing a predetermined monomer, or may be a structural unit derived from a predetermined monomer obtained by post-modifying a structure obtained by polymerizing a different monomer.

### 1. Polymer particles

An aqueous dispersion for ink of the present invention contains polymer particles composed of a polymer (A), in which the content percentage of a structural unit derived from an aromatic group-containing monomer is from 18 to 42 mass%, and a weight average molecular weight is from 50000 to 100000. Hereinafter, the respective components constituting the polymer (A) are described.

### 1-1. Aromatic group-containing monomer

The polymer (A) has a structural unit derived from an aromatic group-containing monomer. This makes it possible to enhance the viscosity stability of the ink to be obtained. Although the mechanism is not clear, it is presumed that incorporation of the structural unit derived from an aromatic group-containing monomer in the polymer (A) constituting the polymer particles easily suppresses aggregation of the polymer particles when the polymer particles are plasticized by the solvent contained in the ink.

The aromatic group-containing monomer is preferably a monomer having at least one aromatic hydrocarbon ring and at least one polymerizable unsaturated group in a molecule.

Examples of the aromatic hydrocarbon ring include a benzene ring, a naphthalene ring, a phenanthrene ring, and an anthracene ring. Among these, a benzene ring or a naphthalene ring is preferable, and a benzene ring is more preferable.

Examples of the polymerizable unsaturated group include a (meth)acryloyl group, a vinyl group, and a maleimide group. Among these, a (meth)acryloyl group and a vinyl group are preferable.

Examples of the aromatic group-containing monomer include styrene-based monomers, aryl (meth)acrylates, aralkyl (meth)acrylates, aryloxy group-containing alkyl (meth)acrylates, and maleimides having an aryl group.

Examples of the styrene-based monomer include styrenes that may have one or more substituents such as a halogen atom (e.g., fluorine atom, chlorine atom, bromine atom, or iodine atom), an alkyl group (e.g., a C₁₋₄ alkyl group such as methyl group, ethyl group, n-propyl group, isopropyl group, n-butyl group, or tert-butyl group), a vinyl group, and an alkoxysilyl group (e.g., a tri C₁₋₄ alkoxysilyl group such as trimethoxysilyl group or triethoxysilyl group). The substituent is preferably at least one selected from a halogen atom and an alkyl group. Specific examples of the styrene-based monomer include styrene, α-methylstyrene, p-methylstyrene, tert-butylstyrene, chlorostyrene, chloromethylstyrene, divinylbenzene, p-styryltrimethoxysilane, and 2-styrylethyltrimethoxysilane.

Examples of the aryl (meth)acrylate include aryl (meth)acrylates that have an aryl group having from 6 to 18 carbon atoms, such as phenyl (meth)acrylate, o-tolyl (meth)acrylate, m-tolyl (meth)acrylate, p-tolyl (meth)acrylate, 2,3-xylyl (meth)acrylate, 2,4-xylyl (meth)acrylate, 2,5-xylyl (meth)acrylate, 2,6-xylyl (meth)acrylate, 3,4-xylyl (meth)acrylate, 3,5-xylyl (meth)acrylate, 1-naphthyl (meth)acrylate, and 2-naphthyl (meth)acrylate.

Examples of the aralkyl (meth)acrylate include aralkyl (meth)acrylates that have an aralkyl group having from 7 to 18 carbon atoms, such as benzyl (meth)acrylate, phenylethyl (meth)acrylate, methylbenzyl (meth)acrylate, and naphthylmethyl (meth)acrylate.

Examples of the aryloxy group-containing alkyl (meth)acrylate include phenoxyethyl (meth)acrylate, phenoxypropyl (meth)acrylate, methylphenoxyethyl (meth)acrylate, and 2-naphthoethyl (meth)acrylate.

Examples of the maleimide having an aryl group include N-phenylmaleimide.

Among these, as the aromatic group-containing monomer, a styrene-based monomer, aryl (meth)acrylate, and aralkyl (meth)acrylate are preferable, styrene that may have at least one substituent selected from a halogen atom and an alkyl group, aryl (meth)acrylate that has an aryl group having from 6 to 18 carbon atoms, and aralkyl (meth)acrylate that has an aralkyl group having from 7 to 18 carbon atoms are more preferable, styrene, aryl (meth)acrylate that has an aryl group having from 6 to 10 carbon atoms, and aralkyl (meth)acrylate that has an aralkyl group having from 7 to 10 carbon atoms are still more preferable, and styrene and benzyl (meth)acrylate are particularly preferable. When the aromatic group-containing monomer is the compound described above, the viscosity stability of the ink to be obtained can be further enhanced.

The polymer (A) may contain one type or two or more types of structural units derived from the aromatic group-containing monomer.

The content percentage of the structural unit derived from the aromatic group-containing monomer in the polymer (A) is from 18 to 42 mass%, and preferably from 20 to 40 mass%. When the above-described content percentage is adjusted to 18 mass% or more (preferably 20 mass% or more), the viscosity stability of the ink to be obtained can be enhanced. When the above-described content percentage is adjusted to 42 mass% or less (preferably 40 mass% or less), the adhesion to a substrate (particularly, an OPP film) can be enhanced.

### 1-2. Hydroxyl group-containing monomer

The polymer (A) preferably further contains a structural unit derived from a hydroxyl group-containing monomer. When the polymer (A) contains a structural unit derived from a hydroxyl group-containing monomer together with a structural unit derived from an aromatic group-containing monomer, the adhesion to a substrate (particularly, a PET film and an OPP film) can be further enhanced.

The hydroxyl group-containing monomer is preferably a monomer having at least one hydroxyl group and at least one polymerizable unsaturated group in a molecule (note that, the aromatic hydrocarbon ring is not included). Examples of the polymerizable unsaturated group include a (meth)acryloyl group, a vinyl group, and a maleimide group. Among these, a (meth)acryloyl group is preferable.

Specific examples of the hydroxyl group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 5-hydroxypentyl (meth)acrylate, 6-hydroxyhexyl (meth)acrylate, and 8-hydroxyoctyl (meth)acrylate; halogen-substituted hydroxyalkyl (meth)acrylates such as 3-chloro-2-hydroxypropyl (meth)acrylate; modified hydroxyalkyl (meth)acrylates such as caprolactone-modified 2-hydroxyethyl (meth)acrylate and 2-(meth)acryloyloxyethyl 2-hydroxyethylphthalate; oxyalkylene-modified monomers such as diethylene glycol (meth)acrylate and polyethylene glycol (meth)acrylate; and hydroxyl group-containing vinyl monomers such as vinyl alcohol and allyl alcohol.

Among these, as the hydroxyl group-containing monomer, hydroxyalkyl (meth)acrylates are preferable, hydroxyalkyl (meth)acrylates that have a hydroxyalkyl group having from 1 to 4 carbon atoms are more preferable, and hydroxyalkyl (meth)acrylates that have a hydroxyalkyl group having from 2 to 4 carbon atoms are still more preferable. When the hydroxyl group-containing monomer is the compound described above, the viscosity stability of the ink to be obtained can be further enhanced.

The polymer (A) may contain one type or two or more types of structural units derived from the hydroxyl group-containing monomer.

The content percentage of the structural unit derived from the hydroxyl group-containing monomer in the polymer (A) is, for example, from 0 to 60 mass%, preferably from 10 to 40 mass%, and more preferably from 15 to 35 mass%. When the content percentage of the structural unit derived from the hydroxyl group-containing monomer is adjusted to the above-described suitable range, the adhesion to a substrate (particularly, a PET film and an OPP film) can be much further enhanced.

The content of the structural unit derived from the hydroxyl group-containing monomer is preferably from 30 to 150 parts by mass, more preferably from 50 to 120 parts by mass, and still more preferably from 70 to 95 parts by mass, per 100 parts by mass of the structural unit derived from the aromatic group-containing monomer. When the content of the structural unit derived from the hydroxyl group-containing monomer is adjusted to the above-described range, the adhesion to a substrate (particularly, a PET film and an OPP film) can be much further enhanced. The content of the structural unit derived from the hydroxyl group-containing monomer may be from 0 to 150 parts by mass per 100 parts by mass of the structural unit derived from the aromatic group-containing monomer.

### 1-3. Cyclic aliphatic group-containing monomer

The polymer (A) preferably further contains a structural unit derived from a cyclic aliphatic group-containing monomer. When the polymer (A) contains a structural unit derived from a cyclic aliphatic group-containing monomer together with a structural unit derived from an aromatic group-containing monomer, the adhesion to a substrate (particularly, an OPP film) can be further enhanced without decreasing the viscosity stability of the ink to be obtained.

The cyclic aliphatic group-containing monomer is preferably a monomer having at least one alicyclic hydrocarbon ring and at least one polymerizable unsaturated group in a molecule (note that, the aromatic hydrocarbon ring and the hydroxyl group are not included).

The alicyclic hydrocarbon ring may be saturated or unsaturated, and is preferably saturated. The alicyclic hydrocarbon ring may be monocyclic or polycyclic such as bicyclic or tricyclic. In the case of a polycyclic ring, a condensed ring is preferable, and a bridged ring is particularly preferable. The alicyclic hydrocarbon ring is preferably a ring having from 3 to 10 carbon atoms. The alicyclic hydrocarbon ring is preferably, for example, a cycloalkyl group (particularly, a cycloalkyl group having from 3 to 10 carbon atoms), an isobornyl group, or an adamantyl group, and more preferably a cycloalkyl group having from 3 to 10 carbon atoms or an isobornyl group.

Examples of the polymerizable unsaturated group include a (meth)acryloyl group, a vinyl group, and a maleimide group. Among these, a (meth)acryloyl group is preferable.

Specific examples of the cyclic aliphatic group-containing monomer include: cycloalkyl (meth)acrylates such as cyclopropyl (meth)acrylate, cyclopentyl (meth)acrylate, cyclohexyl (meth)acrylate, cycloheptyl (meth)acrylate, and cyclooctyl (meth)acrylate; esters of (meth)acrylic acid and a polycyclic alcohol, such as isobornyl (meth)acrylate and adamantyl (meth)acrylate; and cycloalkyl group-containing maleimide such as N-cyclohexylmaleimide.

Among them, as the cyclic aliphatic group-containing monomer, cycloalkyl (meth)acrylate and isobornyl (meth)acrylate are preferable, cycloalkyl (meth)acrylate that has a cycloalkyl group having from 3 to 10 carbon atoms and isobornyl (meth)acrylate are more preferable, and cyclohexyl (meth)acrylate and isobornyl (meth)acrylate are still more preferable. When the cyclic aliphatic group-containing monomer is the compound described above, the adhesion to a substrate can be further enhanced.

The polymer (A) may contain one type or two or more types of structural units derived from the cyclic aliphatic group-containing monomer.

The content percentage of the structural unit derived from the cyclic aliphatic group-containing monomer in the polymer (A) is, for example, from 0 to 60 mass%, preferably from 20 to 50 mass%, and more preferably from 25 to 45 mass%. When the content percentage of the structural unit derived from the cyclic aliphatic group-containing monomer is adjusted to the above-described suitable range, the adhesion to the substrate (particularly, an OPP film) can be further enhanced without decreasing the viscosity stability.

The content of the structural unit derived from the cyclic aliphatic group-containing monomer is preferably from 60 to 180 parts by mass, more preferably from 80 to 160 parts by mass, and still more preferably from 100 to 140 parts by mass, per 100 parts by mass of the structural unit derived from the aromatic group-containing monomer. When the content of the structural unit derived from the cyclic aliphatic group-containing monomer is adjusted to the above-described range, the adhesion to the substrate (particularly, an OPP film) can be further enhanced without decreasing the viscosity stability. The content of the structural unit derived from the cyclic aliphatic group-containing monomer may be from 0 to 180 parts by mass per 100 parts by mass of the structural unit derived from the aromatic group-containing monomer.

From the viewpoint of further improving the viscosity stability of the ink to be obtained and the adhesion to a substrate (particularly, a PET film and an OPP film), the polymer (A) preferably contains the structural unit derived from the hydroxyl group-containing monomer and the structural unit derived from the cyclic aliphatic group-containing monomer described above, together with the structural unit derived from the aromatic group-containing monomer. In the polymer (A) described above, the content of the structural unit derived from the hydroxyl group-containing monomer is preferably from 20 to 150 parts by mass, more preferably from 40 to 100 parts by mass, and still more preferably from 60 to 85 parts by mass, per 100 parts by mass of the structural unit derived from the cyclic aliphatic group-containing monomer.

The content of the structural unit derived from the hydroxyl group-containing monomer is, for example, 0 to 150 parts by mass, preferably 15 to 120 parts by mass, and more preferably 25 to 100 parts by mass, per 100 parts by mass of the total of the structural unit derived from the aromatic group-containing monomer and the structural unit derived from the cyclic aliphatic group-containing monomer.

The total content percentage of the structural unit derived from the aromatic group-containing monomer, the structural unit derived from the hydroxyl group-containing monomer, and the structural unit derived from the cyclic aliphatic group-containing monomer in the polymer (A) is preferably 20 to 100 mass%, more preferably 35 to 99 mass%, still more preferably 50 to 97 mass%, and even still more preferably 75 to 95 mass%.

### 1-4. Other monomers

The polymer (A) may further have a structural unit derived from a monomer other than the aromatic group-containing monomer, the hydroxyl group-containing monomer, and the cyclic aliphatic group-containing monomer (hereinafter, referred to as other monomers). The other monomers are a monomer other than the aromatic group-containing monomer, the hydroxyl group-containing monomer, and the cyclic aliphatic group-containing monomer, and have at least one polymerizable unsaturated group in a molecule. Examples of the other monomers include alkyl (meth)acrylate, a nitrogen atom-containing monomer, and an acid group-containing monomer.

Specific examples of the alkyl (meth)acrylate include methyl (meth)acrylate, ethyl (meth)acrylate, n-propyl (meth)acrylate, isopropyl (meth)acrylate, n-butyl (meth)acrylate, isobutyl (meth)acrylate, 2-butyl (meth)acrylate, tert-butyl (meth)acrylate, n-pentyl (meth)acrylate, 2-pentyl (meth)acrylate, isopentyl (meth)acrylate, neopentyl (meth)acrylate, 3-methyl-2-butyl (meth)acrylate, 3-pentyl (meth)acrylate, n-hexyl (meth)acrylate, 2-hexyl (meth)acrylate, 3,3-dimethyl-2-butyl (meth)acrylate, 3-methyl-2-pentyl (meth)acrylate, 4-methyl-2-pentyl (meth)acrylate, 2,4-dimethyl-3-pentyl (meth)acrylate, n-heptyl (meth)acrylate, 2-heptyl (meth)acrylate, 2-methyl-3-hexyl (meth)acrylate, 3-heptyl (meth)acrylate, 5-methyl-2-hexyl (meth)acrylate, n-octyl (meth)acrylate, 2-octyl (meth)acrylate, 2-ethylhexyl (meth)acrylate, 2,2-dimethyl-3-hexyl (meth)acrylate, 2,5-dimethyl-3-hexyl (meth)acrylate, 3-octyl (meth)acrylate, 4-octyl (meth)acrylate, 5-methyl-2-heptyl (meth)acrylate, 5-methyl-3-heptyl (meth)acrylate, 6-methyl-2-heptyl (meth)acrylate, 6-methyl-3-heptyl (meth)acrylate, n-nonyl (meth)acrylate, isononyl (meth)acrylate, tridecyl (meth)acrylate, dodecyl (meth)acrylate, stearyl (meth)acrylate, henicosyl (meth)acrylate, and tetracosyl (meth)acrylate The polymer (A) may contain one type or two or more types of structural units derived from the alkyl (meth)acrylate.

Among these, the alkyl (meth)acrylate is preferably C₁₋₂₀ alkyl (meth)acrylate. Also, at least one selected from an alkyl (meth)acrylate whose homopolymer has a glass transition temperature (Tg) of -20°C or less (hereinafter, may be referred to as a low Tg alkyl (meth)acrylate) and a C₁₋₅ alkyl methacrylate is preferable. When the content of the structural unit derived from the low Tg alkyl (meth)acrylate and/or the structural unit derived from the C₁₋₅ alkyl methacrylate is appropriately adjusted, it becomes easy to adjust the glass transition temperature of the polymer (A) to the range described later.

As the "glass transition temperature of a homopolymer" in the present specification, for example, a value (when a plurality of Tg are described, the lowest value) described in "POLYMER HANDBOOK THIRD EDITION" (J. BRANDRUP, E. H. IMMERGUT, 1989, published by John Wiley & Sons, Inc., pages: VI/209 to VI/277) may be adopted. For the compounds not described in "POLYMER HANDBOOK, THIRD EDITION", a value (calculated value) determined with a computer using commercially available software for calculating the glass transition temperature (e.g., "MATERIALS STUDIO" available from Accelrys Software Inc., version: 4.0.0.0, module: Synthia, condition: calculated with a polymerization average molecular weight of 100000) may be used.

The Tg of the low Tg alkyl (meth)acrylate is -20°C or less, preferably from -100 to - 20°C, and more preferably from -80 to -30°C. Examples of the low Tg alkyl (meth)acrylate include ethyl acrylate, n-propyl acrylate, n-butyl acrylate, isobutyl acrylate, n-pentyl acrylate, n-hexyl acrylate, n-octyl acrylate, 2-octyl acrylate, 2-ethylhexyl acrylate, n-nonyl acrylate, and isononyl acrylate. Among them, n-butyl acrylate, 2-octyl acrylate, and 2-ethylhexyl acrylate are preferable, and 2-octyl acrylate and 2-ethylhexyl acrylate are more preferable.

The C₁₋₅ alkyl methacrylate is preferably a C₁₋₃ alkyl methacrylate, and more preferably methyl methacrylate.

The content of the structural unit derived from the alkyl (meth)acrylate (particularly, the total content of the structural units derived from the low Tg alkyl (meth)acrylate and the C₁₋₅ alkyl methacrylate) may be appropriately adjusted so that the Tg of the polymer (A) falls within the range described below, and is, for example, from 0 to 600 parts by mass, preferably from 5 to 420 parts by mass, and more preferably from 10 to 420 parts by mass, per 100 parts by mass of the structural unit derived from the aromatic group-containing monomer.

The total content of the structural unit derived from the aromatic group-containing monomer, the structural unit derived from the hydroxyl group-containing monomer, the structural unit derived from the cyclic aliphatic group-containing monomer, and the structural unit derived from the alkyl (meth)acrylate in the polymer (A) is preferably from 60 to 100 mass%, more preferably 80 mass% or more, and still more preferably 90 mass% or more.

The nitrogen atom-containing monomer is a monomer having at least a substituent containing a nitrogen atom as a member and a polymerizable unsaturated group in a molecule (note that, the aromatic hydrocarbon ring, the hydroxyl group, and the alicyclic hydrocarbon ring are not included). Examples of the nitrogen atom-containing monomer include a nitrogen-based heterocycle-containing monomer, an amino group-containing monomer, and an amide group-containing monomer. In the present specification, a monomer, which is the amino group-containing monomer and the amide group-containing monomer but contains a nitrogen-based heterocycle, is treated as the nitrogen-based heterocycle-containing monomer.

Specific examples of the nitrogen-based heterocycle-containing monomer include: vinyl lactam-based monomers such as N-methylvinylpyrrolidone, N-vinylpiperidone, N-vinylcaprolactam, N-vinylpyrrolidone, N-vinyl-2-pyrrolidone, and N-(meth)acryloylpyrrolidone; maleimide-based monomers such as maleimide; piperidyl (meth)acrylic-based monomers such as 2,2,6,6-tetramethyl-4-piperidyl (meth)acrylate and 1,2,2,6,6-pentamethyl-4-piperidyl (meth)acrylate; aziridinyl group-containing (meth) acrylic-based monomers such as (meth)acryloylaziridine and (meth)acrylic acid 2-aziridinyl ethyl; and addition-polymerizable oxazolines such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Specific examples of the amino group-containing monomer include amino group-containing (meth)acrylic-based monomers such as N,N-dimethylaminomethyl (meth)acrylate and N,N-dimethylaminoethyl (meth)acrylate.

Examples of the amide group-containing monomer include (meth)acrylamide-based monomers such as (meth)acrylamide, N-monomethyl (meth)acrylamide, N-monoethyl (meth)acrylamide, N,N-dimethyl (meth)acrylamide, N-n-propyl (meth)acrylamide, N-isopropyl (meth)acrylamide, methylene bis(meth)acrylamide, N-butoxymethyl (meth)acrylamide, dimethylaminoethyl (meth)acrylamide, N,N-dimethylaminopropyl acrylamide, and diacetone acrylamide.

The nitrogen atom-containing monomer is preferably a nitrogen-based heterocycle-containing monomer, more preferably a vinyl lactam-based monomer or a piperidyl (meth)acrylic-based monomer, and still more preferably N-vinyl-2-pyrrolidone, 2,2,6,6-tetramethyl-4-piperidyl (meth)acrylate, or 1,2,2,6,6-pentamethyl-4-piperidyl (meth)acrylate.

From the viewpoint of improving the light stability, a nitrogen atom-containing monomer having a hindered amine structure is preferable. As such a monomer, a monomer having a 2,2,6,6-tetraalkylpiperidine ring structure and a polymerizable unsaturated group ((meth)acryloyl group, vinyl group, or the like) in a molecule is preferable, a monomer having a 2,2,6,6-tetramethylpiperidine ring structure and a polymerizable unsaturated group ((meth)acryloyl group, vinyl group, or the like) is more preferable, and 2,2,6,6-tetramethyl-4-piperidyl (meth)acrylate and 1,2,2,6,6-pentamethyl-4-piperidyl (meth)acrylate are still more preferable.

The content of the structural unit derived from the nitrogen atom-containing monomer is preferably from 0 to 40 parts by mass, more preferably from 2 to 30 parts by mass, and still more preferably from 5 to 25 parts by mass, per 100 parts by mass of the structural unit derived from the aromatic group-containing monomer.

The acid group-containing monomer is a monomer having at least one acid group and at least one polymerizable unsaturated group in a molecule (note that, a substituent containing the aromatic hydrocarbon ring, the hydroxyl group, the alicyclic hydrocarbon ring, and a nitrogen atom as a member is not included). Examples of the acid group include a sulfo group and a carboxy group, and a carboxy group is preferable. Examples of the polymerizable unsaturated group include a (meth)acryloyl group and a vinyl group.

Specific examples of the acid group-containing monomer include unsaturated monocarboxylic acids such as (meth)acrylic acid, cinnamic acid, and crotonic acid; unsaturated dicarboxylic acids such as maleic acid, fumaric acid, itaconic acid, and citraconic acid; monoesters of unsaturated dicarboxylic acids such as monomethyl maleate, monobutyl maleate, monomethyl itaconate, and monobutyl itaconate; anhydrides of unsaturated dicarboxylic acids such as maleic anhydride; 2-acryloyloxyethylsuccinic acid, 2-acryloyloxyethylphthalic acid, and 2-acryloyloxyethylhexahydrophthalic acid. Among these, unsaturated monocarboxylic acids are preferable, and (meth)acrylic acid is more preferable.

The content of the structural unit derived from the acid group-containing monomer is preferably from 0 to 10 parts by mass, and more preferably from 1 to 5 parts by mass, per 100 parts by mass of the structural unit derived from the aromatic group-containing monomer. It may be from 0 to 5 parts by mass, may be from 0 to 4 parts by mass, or may be from 0 to 2 parts by mass. When the content of the structural unit derived from the acid group-containing monomer is adjusted to be equal to or less than the above-described upper limit value, the sedimentation stability of the ink to be obtained can be enhanced. When the content of the structural unit derived from the acid group-containing monomer is adjusted to be equal to or more than the above-described lower limit value, the viscosity stability of the ink to be obtained can be further enhanced.

Examples of the other monomers include:
di(meth)acrylates of alkane diols having from 1 to 10 carbon atoms, such as ethylene glycol di(meth)acrylate, propylene glycol di(meth)acrylate, 1,3-butanediol di(meth)acrylate, 1,4-butanediol di(meth)acrylate, 1,6-hexanediol di(meth)acrylate, and 1,9-nonanediol di(meth)acrylate;
di C₂₋₄ alkylene glycol di(meth)acrylates, such as diethylene glycol di(meth)acrylate, and dipropylene glycol di(meth)acrylate;
poly C₂₋₄ alkylene glycol di(meth)acrylates in which the addition mole number of an alkylene oxide having from 2 to 4 carbon atoms is from 2 to 50, such as polyethylene glycol di(meth)acrylate in which the addition mole number of ethylene oxide is from 2 to 50, and polypropylene glycol di(meth)acrylate, in which the addition mole number of propylene oxide is from 2 to 50;
tri(meth)acrylates of trihydric alcohols having from 1 to 10 carbon atoms, such as ethoxylated glycerin tri(meth)acrylate, propylene oxide-modified glycerol tri(meth)acrylate, ethylene oxide-modified trimethylolpropane tri(meth)acrylate, trimethylolpropane tri(meth)acrylate, and trimethylolpropane triethoxy tri(meth)acrylate;
tetra(meth)acrylates of tetrahydric alcohols having from 1 to 10 carbon atoms, such as pentaerythritol tetra(meth)acrylate, and ditrimethylolpropane tetra(meth)acrylate;
hexa(meth)acrylates of hexahydric alcohols having from 1 to 10 carbon atoms such as dipentaerythritol hexa(meth)acrylate;
2-(2'-vinyloxyethoxyethyl)(meth)acrylate;
(meth)acryloyl group-containing silane coupling agents, such as 3-(meth)acryloxy propyltrimethoxysilane, 3-(meth)acryloxy propyltriethoxysilane, 3-(meth)acryloxy propylmethyldimethoxysilane, 3-(meth)acryloxy propylmethyldiethoxysilane, and 3-(meth)acryloxy ethoxypropyltrimethoxysilane;
vinyl group-containing silane coupling agents such as vinyltrimethoxysilane and vinyltriethoxysilane;
epoxy group-containing silane coupling agents, such as 3-glycidoxypropyltrimethoxysilane, 3-glycidoxypropyltriethoxysilane, and 2-(3,4-epoxycyclohexyl)ethyltrimethoxysilane;
epoxy group-containing (meth)acrylates, such as glycidyl(meth)acrylate, α-methylglycidyl (meth)acrylate, and 2-glycidyloxyethyl (meth)acrylate;
epoxy group-containing vinyl monomers, such as allyl glycidyl ether;
fluoroalkyl (meth)acrylates, such as trifluoroethyl (meth)acrylate, tetrafluoropropyl (meth)acrylate, and octafluoropentyl (meth)acrylate;
alkoxyalkyl group-containing (meth)acrylates, such as methoxyethyl (meth)acrylate, methoxybutyl (meth)acrylate, ethoxybutyl (meth)acrylate, and trimethylolpropane tripropoxy (meth)acrylate;
carbonyl group-containing (meth)acrylates, such as (meth) acryloxy alkylpropenal, acetonyl (meth)acrylate, 2-hydroxypropyl (meth)acrylate acetylacetate, butanediol -1,4-acrylate acetylacetate, and 2-(acetoacetoxy)ethyl (meth)acrylate;
vinyl-based monomers, such as vinyl acetate, vinyl chloride, and vinyl benzoate; and
olefin-based monomers, such as ethylene and propylene.

The polymer (A) may contain one type or two or more types of structural units derived from the other monomers.

### 1-5. Physical properties of polymer (A)

The polymer (A) has a weight average molecular weight (Mw) of from 50000 to 100000. When the Mw of the polymer (A) is adjusted to 50000 or more, the viscosity stability of the ink to be obtained can be enhanced. When the Mw of the polymer (A) is adjusted to 100000 or less, the film formability is improved, and the adhesion to a substrate (particularly, a PET film and an OPP film) can be enhanced. The weight average molecular weight (Mw) of the polymer (A) is more preferably from 60000 to 100000, and still more preferably from 70000 to 90000, from the viewpoint of further enhancing the adhesion to a substrate (particularly, a PET film and an OPP film).

The dispersity (Mw/Mn) of the polymer (A) calculated using the weight average molecular weight (Mw) and the number average molecular weight (Mn) is preferably from 1.0 to 10.0, more preferably from 2.0 to 6.0, and still more preferably from 3.0 to 4.0.

The weight average molecular weight and the number average molecular weight can be calculated by a standard polystyrene conversion method using gel permeation chromatography (GPC).

The glass transition temperature (Tg (°C)) of the polymer (A) is preferably from -30 to 100°C, more preferably from -20 to 80°C, and still more preferably from -10 to 75°C. When the Tg of the polymer (A) is adjusted to be equal to or higher than the above-described lower limit value, the blocking resistance of the ink to be obtained can be enhanced. When the Tg of the polymer (A) is adjusted to be equal to or lower than the above-described upper limit value, the film formability of the ink to be obtained can be enhanced.

The glass transition temperature (°C) of the polymer (A) can be determined by conversion from Tg_{A} (K) determined from the Fox Equation presented below. $1 / {Tg}_{A} = Σ \left(Wm/Tgm\right) / 100$

[In the Equation, Tg_{A} represents a glass transition temperature (absolute temperature: K) of a polymer (A), Wm represents a content (mass%) of a monomer m in all monomer components constituting the polymer (A), and Tgm represents a glass transition temperature (absolute temperature: K) of a homopolymer of a monomer m.

The acid value of the polymer (A) is preferably 10 mg KOH/g or less, more preferably 7 mg KOH/g or less, still more preferably 3 mg KOH/g or less, and particularly preferably 0 mg KOH/g or less. When the acid value of the polymer (A) is adjusted to the above-described range, the sedimentation stability of the ink to be obtained can be enhanced.

The acid value of the polymer (A) indicates the number of milligrams of potassium hydroxide required to neutralize the acid groups contained in 1 g of the polymer (A). The acid value can be determined from the amount of the charged monomer components constituting the polymer (A), that is, from calculation of the number of milligrams of potassium hydroxide required to neutralize the acid groups contained in 1 g of the monomer components charged to synthesize the polymer (A).

### 1-6. Physical properties of polymer particles

The polymer particles contained in the aqueous dispersion for ink of the present invention are composed of the polymer (A). The content of the polymer (A) in the polymer particles is, for example, from 90 to 100 mass%, preferably 95 mass% or more, and more preferably 98 mass% or more.

The shape of the polymer particles is not particularly limited, but is usually spherical. The shape can be measured using a transmission electron microscope or a scanning electron microscope. The polymer particles may have a single-layer structure or a multilayer structure (such as a core-shell structure), but is preferably a single-layer structure.

The average particle size of the polymer particles is preferably from 20 to 300 nm, more preferably from 35 to 200 nm, and still more preferably from 50 to 100 nm. When the average particle size of the polymer particles is adjusted to the above-described range, the polymer particles can be easily blended at a high concentration while the viscosity of the ink is maintained in an appropriate range. When it is used for inkjet, the discharge stability can be enhanced. Note that, the average particle size of the polymer particles may be a volume-based cumulant average particle size measured by a dynamic light scattering method.

### 2. Aqueous dispersion for ink

The aqueous dispersion for ink of the present invention contains polymer particles composed of the polymer (A), and specifically, is a dispersion in which the polymer particles composed of the polymer (A) are dispersed in a water-based solvent. The polymer particles are substantially composed of the polymer (A) alone, and the content percentage of the polymer (A) in the polymer particles is, for example, from 95 to 100 mass%, and preferably from 98 to 100 mass%.

### 2-1. Polymer particles

From the viewpoint of handleability, the content percentage of the polymer particles in the aqueous dispersion for ink of the present invention is preferably from 10 to 80 mass%, more preferably from 20 to 70 mass%, and still more preferably from 30 to 65 mass%. Note that, the content percentage of polymer particles can be determined as a non-volatile content (solids content) of the aqueous dispersion for ink. That is, the solids content of the aqueous dispersion for ink is preferably adjusted to the above-described range.

As a method for calculating the non-volatile content, a known method can be used. The non-volatile content may be calculated as the mass obtained by subtracting the mass of volatile components from the total mass of the aqueous dispersion for ink according to the following Equation 1, or may be calculated according to the following Equation 2 by weighing 1 g of the aqueous dispersion for ink, performing drying with a hot air dryer at a temperature of 110°C for 1 hour, and regarding the obtained residue as a non-volatile content, which is as described in Examples. Equation 1: 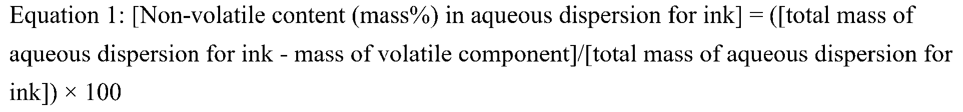 [Non-volatile content (mass%) in aqueous dispersion for ink] = ([total mass of aqueous dispersion for ink - mass of volatile component]/[total mass of aqueous dispersion for ink]) × 100 Equation 2: 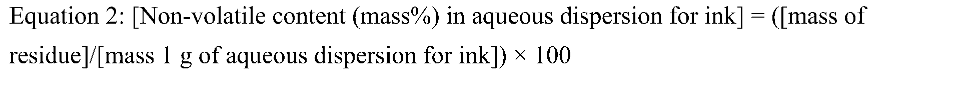 [Non-volatile content (mass%) in aqueous dispersion for ink] = ([mass of residue]/[mass 1 g of aqueous dispersion for ink]) × 100

### 2-2. Water-based solvent

Examples of the water-based solvent contained in the aqueous dispersion for ink of the present invention include water, or a mixed solvent of water and a water-soluble organic solvent. The term "water-soluble organic solvent" refers to an organic solvent that dissolves in water at a concentration of 0.01 mass% or more at normal temperature and normal pressure. As used herein, the term "room temperature" means 25°C and the term "normal pressure" means 1 atm. A content of water in the water-based solvent is preferably from 10 to 100 mass%, more preferably 25 mass% or more, still more preferably 60 mass% or more, and particularly preferably 90 mass% or more. The balance is preferably a water-soluble organic solvent. As the water, ion-exchanged water (deionized water), distilled water, pure water, or the like can be used.

Examples of the water-soluble organic solvent include:
lower alcohols (preferably, C₁₋₄ alcohols), such as methyl alcohol, ethyl alcohol, n-propyl alcohol, isopropyl alcohol, n-butyl alcohol, and tert-butyl alcohol;
glycols, such as propylene glycol, 1,3-propanediol, 1,2-hexanediol, dipropylene glycol, tripropylene glycol, diethylene glycol, triethylene glycol, and tetraethylene glycol;
glycerin;
alkylene glycol monoalkyl ethers (preferably, C₂₋₄ alkylene glycol mono C₁₋₄ alkyl ethers), such as ethylene glycol monoalkyl ethers (e.g., ethylene glycol mono C₁₋₄ alkyl ethers, such as ethylene glycol monomethyl ether, ethylene glycol monoethyl ether, ethylene glycol monopropyl ether, ethylene glycol monoisopropyl ether, ethylene glycol monobutyl ether, and ethylene glycol monoisobutyl ether), and propylene glycol monoalkyl ethers (e.g., propylene glycol mono C₁₋₄ alkyl ethers such as propylene glycol monomethyl ether, propylene glycol monoethyl ether, propylene glycol monopropyl ether, propylene glycol monoisopropyl ether, propylene glycol monobutyl ether, and propylene glycol monoisobutyl ether);
dialkylene glycol monoalkyl ethers (preferably, di C₂₋₄ alkylene glycol mono C₁₋₄ alkyl ethers), such as diethylene glycol monoalkyl ethers (e.g., diethylene glycol mono C₁₋₄ alkyl ethers such as diethylene glycol monomethyl ether, diethylene glycol monoethyl ether, diethylene glycol monopropyl ether, diethylene glycol monoisopropyl ether, diethylene glycol monobutyl ether, and diethylene glycol monoisobutyl ether), and dipropylene glycol monoalkyl ethers (e.g., dipropylene glycol mono C₁₋₄ alkyl ethers such as dipropylene glycol monomethyl ether, dipropylene glycol monoethyl ether, dipropylene glycol monopropyl ether, dipropylene glycol monoisopropyl ether, dipropylene glycol monobutyl ether, and dipropylene glycol monoisobutyl ether);
polyalkylene glycol monoalkyl ethers (preferably, poly C₂₋₄ alkylene glycol mono C₁₋₄ alkyl ethers), such as polyethylene glycol monoalkyl ethers (e.g., polyethylene glycol mono C₁₋₄ alkyl ethers such as polyethylene glycol monomethyl ether, polyethylene glycol monoethyl ether, polyethylene glycol monopropyl ether, polyethylene glycol monoisopropyl ether, polyethylene glycol monobutyl ether, and polyethylene glycol monoisobutyl ether), and polypropylene glycol monoalkyl ethers (e.g., polypropylene glycol mono C₁₋₄ alkyl ethers such as polypropylene glycol monomethyl ether, polypropylene glycol monoethyl ether, polypropylene glycol monopropyl ether, polypropylene glycol monoisopropyl ether, polypropylene glycol monobutyl ether, and polypropylene glycol monoisobutyl ether);
heterocycles such as 2-pyrrolidone and N-methyl-2-pyrrolidone; and
ketones such as acetone and methyl ethyl ketone.

The addition mole number of the alkylene oxide in the polyalkylene glycol monoalkyl ether is preferably from 2 to 10, and more preferably from 2 to 4.

A single type of these water-soluble organic solvents may be used alone, or two or more types thereof may be used in combination.

Among these water-soluble organic solvents, propylene glycol, glycerin, diethylene glycol, triethylene glycol, diethylene glycol monoisopropyl ether, diethylene glycol monobutyl ether, diethylene glycol monoisobutyl ether, polyethylene glycol (addition mole number of ethylene oxide = from 2 to 4) monobutyl ether, and 2-pyrrolidone are preferable, and propylene glycol, triethylene glycol, polyethylene glycol (addition mole number of ethylene oxide = from 2 to 4) monobutyl ether, and 2-pyrrolidone are more preferable.

From the viewpoint of handleability, the content of the water-based solvent in the aqueous dispersion for ink of the present invention is preferably from 30 to 900 parts by mass, more preferably from 50 to 400 parts by mass, and still more preferably from 70 to 250 parts by mass, per 100 parts by mass of the polymer particles.

### 2-3. Other additives

The aqueous dispersion for ink of the present invention may contain an additive such as a pH buffer, a chelating agent, or a chain transfer agent such as a compound having a thiol group, such as tert-dodecylmercaptan. The amount of the additive varies depending on the type or object thereof and thus cannot be determined unconditionally, but is usually preferably from 0.01 to 5 parts by mass, and more preferably from 0.1 to 3 parts by mass, per 100 parts by mass of the polymer particles.

### 2-4. Method for producing aqueous dispersion for ink

The aqueous dispersion for ink of the present invention is preferably produced by a method of emulsion polymerization of monomer components (the aromatic group-containing monomer, and the hydroxyl group-containing monomer, the cyclic aliphatic group-containing monomer, and other monomers used as necessary) in a water-based solvent in the presence of an emulsifier and a polymerization initiator. The types, combination, blending proportions, and the like of the preferable monomer components used in the emulsion polymerization are in accordance with the preferred embodiments described above with regard to the monomers for forming the polymer (A). As specific means and conditions for performing emulsion polymerization, means and techniques in a known emulsion polymerization method can be appropriately selected and adopted. Hereinafter, preferable production methods are described in detail.

As the emulsifier used in the above-described emulsion polymerization, a conventionally known emulsifier, such as a nonionic emulsifier, an anionic emulsifier, a cationic emulsifier, and an amphoteric emulsifier, can be used. A single type of these emulsifiers may be used alone, or two or more types thereof may be used in combination. An emulsifier containing a polymerizable unsaturated group in a molecule may also be used. Examples of the polymerizable unsaturated group include a group having an ethylenically unsaturated double bond. The emulsifier containing a polymerizable unsaturated group is also referred to as reactive emulsifier. A polymer emulsifier can also be used as the emulsifier.

Among the emulsifiers, a nonionic emulsifier or an anionic emulsifier is preferable, and particularly, from the viewpoint of enhancing water resistance and image uniformity, an anionic emulsifier having a polymerizable unsaturated group or a nonionic emulsifier having a polymerizable unsaturated group is more preferable, and an anionic emulsifier having a polymerizable unsaturated group is still more preferable.

Examples of the anionic emulsifier include alkyl sulfate salts such as ammonium dodecyl sulfate and sodium dodecyl sulfate; alkyl sulfonate salts such as ammonium dodecyl sulfonate, sodium dodecyl sulfonate, and sodium alkyl diphenyl ether disulfonate; alkyl aryl sulfonate salts such as ammonium dodecylbenzene sulfonate, sodium dodecylbenzene sulfonate, and sodium dodecylnaphthalene sulfonate; polyoxyethylene alkyl sulfonate salts; polyoxyethylene alkyl ether sulfate salts; polyoxyethylene alkyl aryl ether sulfate salts; polyoxyethylene polycyclic phenyl ether sulfate salts; dialkyl sulfosuccinate salts; arylsulfonic acid-formalin condensate; fatty acid salts such as ammonium laurate and sodium stearylate; sulfate esters having an allyl group or salts thereof, such as bis(polyoxyethylene polycyclic phenyl ether) methacrylate sulfonate salts, propenyl-alkyl sulfosuccinate ester salts, (meth)acrylic acid polyoxyethylene sulfonate salts, (meth)acrylic acid polyoxyethylene phosphonate salts, and sulfonate salts of allyloxymethylalkyloxypolyoxyethylene; sulfate salts of allyloxymethyl alkoxyethyl polyoxyethylene, and polyoxyalkylene alkenyl ether ammonium sulfate.

Examples of the nonionic emulsifier include polyoxyethylene alkyl ethers, polyoxyethylene alkylaryl ethers, condensates of polyethylene glycol and polypropylene glycol, sorbitan fatty acid esters, polyoxyethylene sorbitan fatty acid esters, fatty acid monoglycerides, condensation products of ethylene oxide and aliphatic amines, and polyoxyalkylene alkenyl ethers.

Examples of the polymer emulsifier include poly(meth)acrylate salts such as sodium polyacrylate; polyvinyl alcohol; polyvinylpyrrolidone; polyhydroxyalkyl (meth)acrylates such as polyhydroxyethyl acrylate; and copolymers containing one or more monomers constituting these polymers as a copolymerization component.

Examples of the reactive emulsifier include:
anionic emulsifiers having a polymerizable unsaturated group, such as propenyl-alkylsulfosuccinate ester salts, (meth)acrylic acid polyoxyethylene sulfonate salts, (meth)acrylic acid polyoxyethylene phosphonate salts (e.g., product name: Eleminol RS-30, available from Sanyo Chemical Industries, Ltd.), polyoxyethylene alkyl propenyl phenyl ether sulfonate salts (e.g., product name: AQUALON HS-10, available from DKS Co., Ltd.), sulfonate salts of allyloxymethylalkyloxy polyoxyethylene (e.g., product name: AQUALON KH-10, available from DKS Co., Ltd.), polyoxyethylene styrenated ammonium propenyl phenyl ether sulfate (e.g., product name: AQUALON AR-10, available from DKS Co., Ltd.), sulfonate salts of allyloxymethyl nonylphenoxyethyl hydroxypolyoxyethylene (e.g., product name: ADEKA REASOAP SE-10, available from ADEKA CORPORATION), allyloxymethyl alkoxyethyl hydroxypolyoxyethylene sulfonate ester salts (e.g., product name: ADEKA REASOAP SR-10, SR-30, available from ADEKA CORPORATION), bis(polyoxyethylene polycyclic phenyl ether) methacrylated sulfonate salts (e.g., product name: Antox MS-60, available from Nippon Nyukazai Co., Ltd.), and polyoxyalkylene alkenyl ether ammonium sulfate(e.g., product name: LATEMUL PD-104 and LATEMUL PD-105, available from Kao Corporation); and
nonionic emulsifiers having a polymerizable unsaturated group, such as polyoxyethylene styrenated propenyl phenyl ether (e.g., product name: AQUALON AN-10, available from DKS Co., Ltd.), allyloxymethyl alkoxyethyl hydroxypolyoxyethylenes (e.g., product name: ADEKA REASOAP ER-20, available from ADEKA CORPORATION), polyoxyethylene alkyl propenyl phenyl ethers (e.g., product name: AQUALON RN-20, available from DKS Co., Ltd.), allyloxymethyl nonylphenoxyethyl hydroxypolyoxyethylenes (e.g., product name: ADEKA REASOAP NE-10, available from ADEKA CORPORATION), and polyoxyalkylene alkenyl ether (e.g., product name: LATEMUL PD-420 and LATEMUL PD-430, available from Kao Corporation).

When a reactive emulsifier is used in the production of the polymer (A), the polymer (A) contains a structural unit derived from the reactive emulsifier. The content percentage of the structural unit derived from the reactive emulsifier in the polymer (A) is preferably from 0.5 to 10 mass%, more preferably from 1.0 to 8 mass%, and still more preferably from 1.5 to 6 mass%.

The amount of the emulsifier used is, for example, preferably from 0.5 to 10 parts by mass, more preferably from 1.0 to 8 parts by mass, and still more preferably from 1.5 to 6 parts by mass, relative to 100 parts by mass of the monomer components. If necessary, a protective colloid may be used alone or in combination with the emulsifier.

The polymerization initiator used during the emulsion polymerization is not limited, and examples thereof include, but are not limited to, an azo-based polymerization initiator, such as azobisisobutyronitrile, 2,2-azobis(2-methylbutyronitrile), 2,2-azobis(2,4-dimethylvaleronitrile), 2,2-azobis(2-diaminopropane) hydrochloride, 4,4-azobis(4-cyanovaleric acid), and 2,2-azobis(2-methylpropionamidine); a persulfate salt such as ammonium persulfate and potassium persulfate; and a peroxide-based polymerization initiator such as hydrogen peroxide, benzoyl peroxide, p-chlorobenzoyl peroxide, lauroyl peroxide, and ammonium peroxide. A single type of these polymerization initiators may be used alone, or two or more types thereof may be used in combination.

The amount of the polymerization initiator used in the emulsion polymerization is preferably from 0.01 to 3 parts by mass, more preferably from 0.05 to 2 parts by mass, and still more preferably from 0.1 to 1 part by mass, relative to 100 parts by mass of the monomer components. When an increase in polymerization rate or a decrease in reaction temperature is necessary, a reducing agent such as a soluble sulfite salt or ascorbic acid, or a metal compound that generates a heavy metal ion in water, such as iron(II) sulfate, can be used as a redox-based initiator in combination with the peroxide-based polymerization initiator or the persulfate salt.

The reaction temperature during the emulsion polymerization can be appropriately set in consideration of details such as the weight average molecular weight of the polymer (A) to be produced, the blending proportions of the monomer components, and the type of polymerization initiator, and the reaction temperature is, for example, from 0 to 100°C, preferably from 50 to 95°C, and more preferably from 60 to 90°C, and the reaction time is, for example, from 0.5 to 30 hours, preferably from 1 to 20 hours, and more preferably from 3 to 10 hours. Reaction pressure is also not particularly limited, and may be any of normal pressure (atmospheric pressure), reduced pressure, or increased pressure. The polymerization reaction is preferably performed in an atmosphere of an inert gas such as nitrogen gas.

Examples of the water-based solvent during the emulsion polymerization include the same water-based solvents described in the water-based solvents contained in the aqueous dispersion for ink of the present invention, and preferable aspects thereof are also the same.

The amount of the water-based solvent used in the emulsion polymerization is not limited, but is preferably from 20 to 300 parts by mass, and more preferably from 40 to 200 parts by mass, relative to 100 parts by mass of the monomer components.

Specific examples of the polymerization method in the emulsion polymerization include a polymerization method involving dropwise addition of the monomers, a polymerization method involving dropwise addition of a pre-emulsion, a seed polymerization method, and a multistage polymerization method.

As necessary, an additive such as a pH buffer, a chelating agent, or a chain transfer agent such as a compound having a thiol group, such as tert-dodecylmercaptan, may be added in an appropriate amount in the reaction system of the emulsion polymerization. The amount of the additive varies depending on the type thereof and thus cannot be determined unconditionally, but is usually preferably from 0.01 to 5 parts by mass, and more preferably from 0.1 to 3 parts by mass, relative to 100 parts by mass of the monomer components.

### 3. Aqueous ink

The aqueous ink of the present invention contains the aqueous dispersion for ink and a colorant.

### 3-1. Polymer particles

As described above, the aqueous ink of the present invention contains the aqueous dispersion for ink, that is, the aqueous ink of the present invention contains the polymer particles described above. The content percentage of the polymer particles in the aqueous ink may be set according to the characteristics required for the ink, and is preferably from 5 to 40 mass%, and more preferably from 8 to 25 mass%. The content percentage of the polymer particles in the solids content of the aqueous ink is preferably from 15 to 90 mass%, more preferably from 25 to 75 mass%, and still more preferably from 35 to 55 mass%. When the content percentage of the polymer particles in the aqueous ink or the solids content of the aqueous ink is set to the above-described range, it becomes easier to achieve both the substrate adhesion and the viscosity stability. In the present specification, the solids content of the aqueous ink refers to a component obtained by excluding the solvent from the aqueous ink.

### 3-2. Colorant

Examples of the hue of the colorant include achromatic colors such as white, black, and gray, and chromatic colors such as yellow, magenta, cyan, blue, red, orange, and green, and among these, white is preferable. In the present technical field, when a white ink obtained using a colorant having a white hue is solidly printed over a wide range of a resin film and a non-white ink (color ink) is printed thereon, a packaging film having improved visibility may be produced. The aqueous ink of the present invention can exhibit high adhesion to a resin film (particularly, a PET film and an OPP film), and therefore, can be suitably used also as a white ink having a large contact surface with such a resin film.

The colorant may be either a pigment or a dye. These may be used alone or two or more types thereof may be used in combination. Among these, pigments are preferable because of excellent weather resistance. When a pigment is used, the pigment may be used, for example, in the form of a pigment dispersion such as a paste. Examples of the pigment include organic pigments and inorganic pigments. If necessary, the pigments may be used in combination with an extender pigment.

Examples of the organic pigment include azo pigments such as benzidine and Hansa yellow; diazo pigments; azomethine pigments; methine pigments; anthraquinone pigments; phthalocyanine pigments such as phthalocyanine blue; perinone pigments; perylene pigments; diketopyrrolopyrrole pigments; thioindigo pigments; iminoisoindoline pigments; isoindolinone pigments such as iminoisoindolinone; dioxazine pigments; quinacridone pigments such as Quinacridone Red and Quinacridone Violet; flavanthrone pigments; indanthrone pigments; anthrapyrimidine pigments; carbazole pigments; Monoarylide Yellow; Diarylide Yellow; Benzimidazolone Yellow; Tolyl Orange; Naphthol Orange; and quinophthalone pigments. Preferable examples of the organic pigment include products of product numbers such as C.I. Pigment Yellow, C.I. Pigment Red, C.I. Pigment Orange, C.I. Pigment Violet, C.I. Pigment Blue, and C.I. Pigment Green.

Examples of the inorganic pigment include titanium dioxide, antimony trioxide, zinc oxide such as zinc white, lithopone, lead white, red iron oxide, black iron oxide, chromium oxide green, carbon black, chrome yellow, molybdenum red, ferric ferrocyanide (Prussian blue), ultramarine, and lead chromate. Examples of the inorganic pigment also include pigments having a flat shape, such as mica, clay, aluminum powder, talc, and aluminum silicate; and extender pigments such as calcium carbonate, magnesium hydroxide, aluminum hydroxide, barium sulfate, and magnesium carbonate. Examples of carbon black include furnace black, thermal lamp black, acetylene black, and channel black.

Among the pigments, inorganic pigments are preferable, white pigment is more preferable, and at least one selected from titanium dioxide, antimony trioxide, zinc oxide such as zinc white, lithopone, lead white, calcium carbonate, magnesium hydroxide, aluminum hydroxide, barium sulfate, magnesium carbonate, clay, talc, and aluminum silicate is more preferable. Among these, titanium dioxide is preferable from the viewpoint of a high refractive index and excellent concealment properties, and titanium dioxide whose crystal structure is rutile is more preferable.

From the viewpoints of dispersion stability and color development or concealment properties, the volume average particle size of the pigment is preferably from 10 to 1000 nm, and more preferably from 20 to 500 nm.

Particularly when the pigment is a white pigment, the volume average particle size of the white pigment is preferably from 100 to 500 nm, more preferably from 150 to 450 nm, and still more preferably from 200 to 400 nm from the viewpoint of more excellent concealment properties.

The volume average particle size of the pigment refers to the volume average particle size of the pigment in the aqueous ink of the present invention. The volume average particle size of the pigment can be measured using a laser diffraction scattering-type particle size distribution meter or by a dynamic light scattering method. For example, a volume-based cumulant average particle size measured by a dynamic light scattering method can be adopted. However, when measurement by the dynamic light scattering method is difficult as in the case of a black pigment or the like, a 50% particle size in a volume-based particle size distribution obtained by measuring with a laser diffraction scattering-type particle size distribution meter can be adopted as the volume average particle size.

The pigment is preferably dispersion-stabilized with a dispersant in the aqueous ink. The dispersant is preferably an ionic dispersant, and preferably a polymer dispersant. Examples of the polymer dispersant include poly(meth)acrylic acid (salt) such as poly(meth)acrylic acid and a poly(meth)acrylate salt; a copolymer of (meth)acrylic acid (salt) and one type or two or more types of the monomer components other than the (meth)acrylic acid (salt), such as alkyl (meth)acrylate, (meth)acrylamide, styrene, maleic acid, maleic anhydride, maleate, and vinyl acetate; polyvinyl alcohol; and polyvinyl pyrrolidone.

The dispersant may have an acid value. From the viewpoint of reducing the viscosity of the aqueous ink, improving the dispersion stability, and suppressing an increase in conductivity, the acid value of the dispersant is preferably 150 mg KOH/g or less, more preferably 100 mg KOH/g or less, and still more preferably 50 mg KOH/g or less. The lower limit value is not particularly limited, but may be 5 mg KOH/g or more, preferably 6 mg KOH/g or more, and more preferably 7 mg KOH/g or more.

As the dispersant, a commercially available product may be used. Examples thereof include: Disperbyk-102, Disperbyk-111, Disperbyk-190, Disperbyk-191, Disperbyk-194N, Disperbyk-2010, Disperbyk-2012, and Disperbyk-2015, available from BYK Japan KK; TEGO Dispers-715W, TEGO Dispers-750W, and TEGO Dispers-755W, available from Evonik Japan Co., Ltd.; and Efka6230 available from BASF. Among these, Disperbyk-190, Disperbyk-191, Disperbyk-194N, Disperbyk-2010, Disperbyk-2015, and TEGO Dispers-750W are preferable.

Examples of the dye include C. I. Solvent Black, C. I. Solvent Red, C. I. Solvent Yellow, C. I. Solvent Blue, C. I. Solvent Green, C. I. Solvent Orange, and C. I. Solvent Violet, but the dye is not limited to these examples.

The content of the colorant in the solids content of the aqueous ink of the present invention is preferably from 5 to 80 mass%, more preferably from 20 to 70 mass%, and still more preferably from 35 to 60 mass%.

### 3-3. Water-based solvent

The aqueous ink of the present invention contains a water-based solvent as a solvent. The water-based solvent acts as a diluent to adjust the viscosity of the aqueous ink. The content of the water-based solvent is preferably from 50 to 100 mass%, more preferably from 80 to 100 mass%, and still more preferably from 95 to 100 mass%, in 100 mass% of the whole solvent contained in the aqueous ink of the present invention.

The water-based solvent may be a solvent derived from the water-based solvent contained in the aqueous dispersion for ink described above, or may be a mixed solvent of a solvent derived from the water-based solvent and another water-based solvent. Specific examples of the water-based solvent contained in the aqueous ink of the present invention include the same water-based solvents as those described as the water-based solvent contained in the aqueous dispersion for ink.

From the viewpoint of controlling wet-spreading of the aqueous ink to a substrate, improving the quality of printed images, and enhancing discharge stability, the water-based solvent contained in the aqueous ink preferably contains a water-soluble organic solvent. The content percentage of the water-soluble organic solvent in the water-based solvent is preferably from 20 to 65 mass%, and more preferably from 30 to 55 mass%. The content of the water-soluble organic solvent in the aqueous ink is preferably from 15 to 45 mass%, more preferably from 20 to 40 mass%, and still more preferably from 25 to 35 mass%.

Particularly, from the viewpoint of improving the quality of printed images and safety of the aqueous ink, the water-soluble organic solvent is preferably a water-soluble organic solvent having a boiling point of 150°C or more, and more preferably a water-soluble organic solvent having a boiling point of 180°C or more. In addition, from the viewpoint of enhancing the drying property of the aqueous ink, the boiling point of the water-soluble organic solvent is preferably 270°C or less, and more preferably 240°C or less. That is, the boiling point of the water-soluble organic solvent is preferably 150 to 270°C, and more preferably 180 to 240°C.

Specifically as the water-soluble organic solvent, propylene glycol, diethylene glycol, triethylene glycol, glycerin, diethylene glycol monobutyl ether, and dipropylene glycol monomethyl ether are preferable, and propylene glycol and dipropylene glycol monomethyl ether are more preferable.

The content of the water-based solvent in the aqueous ink of the present invention may be set depending on the desired viscosity of the aqueous ink and the like, and is not particularly limited. However, from the viewpoint of handleability, it is, for example, from 40 to 90 mass%, preferably from 50 to 88 mass%, and more preferably from 55 to 85 mass%.

### 3-4. Other additives

The aqueous ink of the present invention may further contain an additive as long as the object of the present invention is not impaired. For example, an additive such as a surfactant, a dispersant, a crosslinking agent, a leveling agent, an ultraviolet absorber, an ultraviolet stabilizer, a thickener, a wetting agent, a plasticizer, a stabilizer, an antifoaming agent, an antioxidant, a crosslinking accelerator, a pH adjuster, and a preservative may be contained in an appropriate amount.

As the surfactant, a known surfactant such as an acetylene glycol-based surfactant, a silicone-based surfactant, or a fluorine-based surfactant can be used.

As the dispersant, the same dispersant as described above can be used.

As the crosslinking agent, an oxazoline group-containing compound, a carbodiimide group-containing compound, or the like can be preferably used from the viewpoint of improving the strength of the coating film. Examples of the oxazoline group-containing compound include EPOCROS WS-500, EPOCROS WS-700, EPOCROS K-2010, EPOCROS K-2020, and EPOCROS K-2030 available from NIPPON SHOKUBAI CO., LTD. Examples of the carbodiimide group-containing compound include CARBODILITE SV-02, CARBODILITE V-02, CARBODILITE V-02-L2, CARBODILITE E-02, and CARBODILITE E-05 available from Nisshinbo Chemical Inc.

When the additive is added, the content thereof is not particularly limited, but is preferably from 0.01 to 5 mass%, and more preferably from 0.05 to 3 mass% in the aqueous ink of the present invention.

In particular, when the surfactant is added, the content thereof is, for example, from 0.01 to 2 mass% in 100 mass% of the aqueous ink. In addition, when the dispersant is added, the content thereof is, for example, from 0.3 to 3 mass% in 100 mass% of the aqueous ink. In addition, when the crosslinking agent is added, the content thereof is preferably from 0.1 to 15 mass% and more preferably from 1 to 10 mass% in 100 mass% of the aqueous ink.

As long as the object of the present invention is not impaired, the aqueous ink of the present invention may further contain another binder resin other than the polymer (A), such as a vinyl-based resin, a (meth)acrylic resin, an olefin-based resin, a urethane-based resin, a fluorine-based resin, a silicone-based resin, an epoxy resin, a phenoxy resin, a phenol resin, or a xylene resin. As the olefin-based resin, polyolefin-based wax and the like can be used from the viewpoint of improving abrasion resistance, and examples of the polyolefin-based wax include AQUACER497, AQUACER515, AQUACER531, and AQUACER1547, available from BYK.

The polymer particles composed of the above-described polymer (A) are also included in the binder resin in the aqueous ink of the present invention. The content of the polymer particles composed of the polymer (A) in 100 mass% of the binder resin contained in the ink of the present invention is preferably from 70 to 100 mass%, more preferably 85 mass% or more, still more preferably 95 mass% or more. The above-described another binder resin is also preferably added as polymer particles composed of the resin.

### 3-5. Physical properties of aqueous Ink

The viscosity of the aqueous ink of the present invention, which is measured at a temperature of 25°C and a rotation speed of 10 rpm using an E-type viscometer, is preferably in a range of from 2 to 20 mPa·s, and more preferably in a range of from 2 to 15 mPa·s. By adjusting the viscosity of the aqueous ink to the above-described range, when the aqueous ink is applied to inkjet printing, nozzle clogging of an inkjet head can be suppressed.

The aqueous ink of the present invention has a good viscosity stability. A difference in viscosity of the aqueous ink of the present invention before and after the aqueous ink of the present invention is stored at 50°C for 4 weeks is preferably less than 2 mPa·s, more preferably less than 1.0 mPa·s, and still more preferably less than 0.5 mPa·s.

### 3-6. Method for producing aqueous ink

The method for producing the aqueous ink of the present invention is not particularly limited. For example, the aqueous ink of the present invention can be produced using the aqueous dispersion for ink, and specifically, can be produced by mixing the aqueous dispersion for ink and the colorant, and the water-based solvent and other additives used as necessary. One example of the method for producing the aqueous ink is described below, but is not limited thereto.

First, the aqueous dispersion for ink is prepared. The aqueous dispersion for ink can be produced by the conventionally known emulsion polymerization method as described above.

In addition, when the pigment is used as the colorant, a pigment dispersion, in which the pigment is dispersed in a water-based solvent, is preferably prepared. The pigment dispersion can be produced, for example, by mixing a pigment and a dispersant in a water-based solvent such as water and performing a dispersion treatment using a bead mill or the like. As the dispersant, the same dispersant as described above can be used.

The content of the pigment in the pigment dispersion is not particularly limited, but is preferably from 5 to 80 mass% in 100 mass% of the pigment dispersion. In particular, when the pigment is a white pigment, the content of the white pigment in the pigment dispersion is preferably from 20 to 80 mass%, more preferably from 30 to 70 mass%, and still more preferably from 40 to 60 mass%.

The content of the dispersant is preferably from 2 to 10 parts by mass, and more preferably from 2 to 5 parts by mass relative to 100 parts by mass of the pigment, from the viewpoint of dispersion stability and blocking resistance.

The pigment dispersion may contain a surfactant. As the surfactant, the same surfactant as described above can be used. The content of the surfactant in the pigment dispersion is preferably from 0.01 to 1 mass%.

Next, the aqueous dispersion for ink, the pigment dispersion and/or other colorants such as a dye, and the water-based solvent and other additives used as necessary are mixed. In the mixing, the compounds of the above-described other colorants and other additives may be used as they are, or may be added in the form of a solution diluted with a solvent or the like. The method and order of mixing the above-described components are not particularly limited. After the mixing, centrifugation, filtration through a filter, or the like may be performed as necessary.

### 4. Printed article

The present invention also encompasses a printed article including a printed layer (image) formed from the aqueous ink. In the printed article, printed layers formed from the aqueous ink are preferably laminated on a substrate.

Examples of the substrate include: paper; paper (coated paper, and the like) on which a resin film such as polyethylene, polypropylene, or polystyrene is laminated; metal plates such as aluminum, zinc, or copper; polyolefin films such as polyethylene film, oriented polypropylene (OPP) film, and cast polypropylene film (CPP); polyester films such as polyethylene terephthalate (PET) film; resin films such as polyvinyl chloride film, nylon film, cellulose film, polystyrene film, polycarbonate film, polyvinyl acetal film, and acrylic resin film; paper having a metal coating; and resin films having a metal coating. Among these, a resin film is preferable, a polyolefin film and a polyester film are more preferable, and an OPP film and a PET film are still more preferable.

In the resin film, the surface on which the printed layer is to be laminated (that is, the surface on which the aqueous ink of the present invention is to be printed) may be chemically or physically modified by a corona treatment, an anchor coating treatment, or the like. As a result, adhesion to the printed layer formed from the aqueous ink of the present invention is more excellent. In particular, a corona-treated polyolefin film and a corona-treated polyester film are preferable, and a corona-treated OPP film and a corona-treated PET film are more preferable.

The thickness of the substrate is not particularly limited, but is preferably from 1 to 500 µm, more preferably from 2 to 200 µm, still more preferably from 5 to 100 µm, and particularly preferably from 10 to 90 µm.

The printed article can be produced by printing the aqueous ink on a substrate. The printing method is not particularly limited, and flexographic printing, offset printing, lithographic printing, gravure printing, screen printing, inkjet printing, or the like can be adopted. In particular, digital printing is preferable, and, among these, inkjet printing is more preferable, because of non-platemaking, resource saving, and energy saving. Hereinafter, one example of the method for producing the printed article through inkjet printing is described, but is not limited thereto.

The printed article through inkjet printing can be produced by a production method including a printed layer forming step of allowing the aqueous ink of the present invention to adhere to a substrate using an inkjet printer to form a printed layer. The inkjet printer used in the printed layer forming step is not particularly limited, and a conventionally known inkjet printer can be used. As the inkjet printer, for example, any type such as a piezo type, a thermal type, and a charge change control type (continuous ejection type) may be used. When the piezo type inkjet printer is used, the ink ejection conditions and the like are not particularly limited.

In the printed layer forming step, the aqueous ink of the present invention ejected from the nozzle opening of the inkjet printer head adheres to the substrate to form a printed layer (image).

The substrate on which the printed layer is formed in the printed layer forming step is preferably further heated and dried at a temperature higher than room temperature. Through the heating treatment at a temperature higher than room temperature, removal of volatile components such as a solvent derived from the aqueous ink and contained in the printed layer formed on the substrate can be promoted, and fixation of the printed layer can be promoted. In addition, adhesion or the like of the printed layer can be further improved by film formation (fusion) of the binder resin (polymer particles composed of the polymer (A)) contained in the aqueous ink.

The heating may be performed simultaneously with the printed layer forming step or may be performed after the printed layer forming step. Both steps may be combined. Examples of the method of performing the heating simultaneously with the printed layer forming step include a method of performing the printed layer forming step while the substrate is heated. When the heating is performed after the printed layer forming step, preferable examples of thereof include a heating method using a heating-drying machine, a heating method using a heat press, a heating method using an infrared lamp, and a method using steam such as normal-pressure steam or high-pressure steam. Among these, the heating method is preferably performed after the printed layer forming step because the airflow may be disturbed when heating is performed simultaneously with the printed layer forming step.

The heating temperature (drying temperature) is preferably from 30 to 120°C, and more preferably 50 to 110°C. The heating time (drying time) may be appropriately set depending on the drying temperature, and is, for example, from 10 seconds to 1 hour, and preferably from 30 seconds to 10 minutes, from the viewpoint of the productivity.

The present application claims the benefit of priority based on Japanese Patent Application No. 2023-218604 filed on December 25, 2023. The entire content of the specification of Japanese Patent Application No. 2023-218604, filed on December 25, 2023, is incorporated herein by reference.

### Examples

Next, the present invention will be described in more detail with reference to Examples, but the present invention is not limited to only such Examples. Note that, hereinafter, "parts" represents "parts by mass" and "%" represents "mass%" in the following Examples unless otherwise specified.

The physical properties of the aqueous dispersions and the polymer particles contained in the aqueous dispersions obtained in the respective Examples and Comparative Examples were measured as follows.

### Glass transition temperature of polymer

The glass transition temperature (Tg) of the polymer constituting the polymer particles contained in the aqueous dispersion was calculated based on the Fox Equation represented by the following Equation using the glass transition temperature of a homopolymer of each monomer used in the monomer component constituting the polymer. $1 / {Tg}_{A} = Σ \left(Wm/Tgm\right) / 100$

[In the Equation, Tg_{A} represents a glass transition temperature (absolute temperature: K) of a polymer, Wm represents a content (mass%) of a monomer m in all monomer components constituting the polymer, and Tgm represents a glass transition temperature (absolute temperature: K) of a homopolymer of a monomer m.

### Acid value of polymer

The acid value of the polymer constituting the polymer particles contained in the aqueous dispersion was obtained by approximating the number of mg of potassium hydroxide required for neutralizing the acid groups present in 1 g of the monomer components constituting the polymer as the acid value.

### Non-volatile content (NV Value) of aqueous dispersion

The non-volatile content of the aqueous dispersion was calculated based on the following formula by weighing 1 g of the aqueous dispersion, performing drying with a hot air dryer at a temperature of 110°C for 1 hour, and regarding the obtained residue as the non-volatile content. Equation: [Non-volatile content (mass%) in aqueous dispersion] = ([mass of residue]/[mass 1 g of aqueous dispersion]) × 100

### Weight average molecular weight of polymer

The weight average molecular weight of the polymer constituting the polymer particles contained in the aqueous dispersion was determined from a gel permeation chromatography chart prepared using gel permeation chromatography equipped with an RI detector [available from Tosoh Corporation, product number: HLC-8120GPC, columns: TSKgel G-5000HXL and TSKgel GMHXL-L used in series, eluent: tetrahydrofuran (THF)] and a calibration curve prepared using standard polystyrenes F-450, A-5000, A-1000, and A-300 available from Tosoh Corporation.

Regarding the average particle size (fluid dynamic size) of the polymer particles contained in the aqueous dispersion, auto-correlation functions were determined at a measurement temperature of 25°C by a photo-correlation method using a multi-sample nanoparticle size measurement system [product name: nanoSAQLA, available from Otsuka Electronics Co., Ltd.], which is a particle size measurement device using the dynamic light scattering method, and the average particle size was determined by cumulant analysis.

### Preparation of aqueous dispersion

### Example 1

A flask equipped with a dropping funnel, a stirrer, a nitrogen gas inlet tube, a thermometer, and a reflux condenser was charged with 1050 parts of deionized water. A pre-emulsion for dropwise addition, which contained 381 parts of deionized water, 80 parts of a 25% aqueous solution of an emulsifier [reactive emulsifier, available from ADEKA CORPORATION, product name: ADEKA REASOAP SR-10], 300 parts of styrene, 250 parts of 2-ethylhexyl acrylate, 450 parts of methyl methacrylate, and 10 parts of tert-dodecyl mercaptan, was prepared in the dropping funnel. 74 parts of the pre-emulsion corresponding to 5% of the total amount thereof was added to the flask, and the temperature was raised to 80°C while nitrogen gas was gently blown. Then, 30 parts of a 5% aqueous ammonium persulfate solution was added to initiate polymerization. Subsequently, the remainder of the pre-emulsion for dropwise addition and 30 parts of a 5% aqueous ammonium persulfate solution were uniformly added dropwise into the flask over 180 minutes.

After completion of the dropwise addition, the content of the flask was maintained at 80°C for 120 minutes, the pH was adjusted to 8 by adding 25% ammonia water, and the polymerization was terminated. The obtained reaction liquid was cooled to room temperature and then filtered with a 300 mesh wire net to prepare an aqueous dispersion containing polymer particles. The non-volatile content (NV value) in this aqueous dispersion was 40 mass%. The average particle size of the polymer particles contained in the aqueous dispersion was 100 nm, and the polymer constituting the polymer particles had an acid value of 0 mg KOH/g, a glass transition temperature of 37°C, and a weight average molecular weight of 83000.

### Examples 2 to 18 and Comparative Examples 1 to 4

Aqueous dispersions were prepared in the same manner as in Example 1 except that the types and amounts of the monomer components, the emulsifier, and the chain transfer agent were changed as presented in Tables 1 and 2.

### Preparation of white paste A

424 parts of deionized water, 535 parts of JR-403 [available from TAYCA CORPORATION, titanium oxide], 40 parts of Disperbyk-190 [available from BYK Japan KK, dispersant, acid value 10 mg KOH/g, active ingredient concentration 40%], 1 part of OLFINE D-10 [available from Nissin Chemical Industry Co., Ltd., surfactant], and 200 parts of glass beads (diameter 1 mm) were dispersed by a disper at a rotation speed of 3000 min⁻¹ for 120 minutes, and then filtered through a 300 mesh wire net, to prepare a white paste A.

### Preparation of aqueous ink

### Experimental Examples 1 to 14 and Comparative Experimental Examples 1 to 4

To 32.5 parts of each of the aqueous dispersions obtained in Examples 1 to 14 and Comparative Examples 1 to 4, 27.2 parts of the white paste A, 15 parts of propylene glycol (hereinafter, PG), 15 parts of dipropylene glycol monomethyl ether (hereinafter, MFDG), 0.8 parts of BYK-3480 [available from BYK Japan KK, surfactant], and deionized water were added so that the total amount reached 100 parts under stirring with a homodisper at a rotation speed of 1000 min⁻¹, further stirred for 30 minutes, and then filtered through a 3 µm filter [available from ADVANTEC TOYO KAISHA, LTD., MCP-3-C10S], to prepare an aqueous ink.

### Experimental Example 15

To 29.3 parts of the aqueous dispersion obtained in Example 15, 3.7 parts of a polyolefin-based wax [available from BYK Japan KK, AQUACER515, non-volatile content: 35 mass%] was added. Then, 27.2 parts of the white paste A, 15 parts of PG, 15 parts of MFDG, 0.8 parts of BYK-3480 [available from BYK Japan KK, surfactant], and deionized water were added so that the total amount reached 100 parts under stirring with a homodisper at a rotation speed of 1000 min⁻¹, further stirred for 30 minutes, and then filtered through a 3 µm filter [available from ADVANTEC TOYO KAISHA, LTD., MCP-3-C10S], to prepare an aqueous ink. The details are described in Table 2.

### Experimental Example 16

To 30.9 parts of the aqueous dispersion obtained in Example 16 was added 2.6 parts of an oxazoline-based crosslinking agent [available from NIPPON SHOKUBAI CO., LTD., WS-700, non-volatile content: 25 mass%]. Then, 27.2 parts of the white paste A, 15 parts of PG, 15 parts of MFDG, 0.8 parts of BYK-3480 [available from BYK Japan KK, surfactant], and deionized water were added so that the total amount reached 100 parts under stirring with a homodisper at a rotation speed of 1000 min⁻¹, further stirred for 30 minutes, and then filtered through a 3 µm filter [available from ADVANTEC TOYO KAISHA, LTD., MCP-3-C10S], to prepare an aqueous ink. The details are described in Table 2.

### Experimental Example 17

To 30.9 parts of the aqueous dispersion obtained in Example 17 was added 1.6 parts of a carbodiimide-based crosslinking agent [available from Nisshinbo Chemical Inc., CARBODILITE SV-02, non-volatile content: 40%]. Then, 27.2 parts of the white paste A, 15 parts of PG, 15 parts of MFDG, 0.8 parts of BYK-3480 [available from BYK Japan KK, surfactant], and deionized water were added so that the total amount reached 100 parts under stirring with a homodisper at a rotation speed of 1000 min⁻¹, further stirred for 30 minutes, and then filtered through a 3 µm filter [available from ADVANTEC TOYO KAISHA, LTD., MCP-3-C10S], to prepare an aqueous ink. The details are described in Table 2.

### Experimental Example 18

To 27.6 parts of the aqueous dispersion obtained in Example 18, 3.7 parts of a polyolefin-based wax [available from BYK Japan KK, AQUACER515, non-volatile content: 35 mass%] and 1.6 parts of a carbodiimide-based crosslinking agent [available from Nisshinbo Chemical Inc., CARBODILITE SV-02, non-volatile content: 40%] were added. Then, 27.2 parts of the white paste A, 15 parts of PG, 15 parts of MFDG, 0.8 parts of BYK-3480 [available from BYK Japan KK, surfactant], and deionized water were added so that the total amount reached 100 parts under stirring with a homodisper at a rotation speed of 1000 min⁻¹, further stirred for 30 minutes, and then filtered through a 3 µm filter [available from ADVANTEC TOYO KAISHA, LTD., MCP-3-C10S], to prepare an aqueous ink. The details are described in Table 2.

### Production of inkjet printed article

A corona-treated PET film (available from Futamura Chemical Co., Ltd., product name: TAIKO polyester film FE2001) or a corona-treated OPP film (available from Futamura Chemical Co., Ltd., product name: FOR-AQ) was used as a substrate, and a solid image of an aqueous ink was printed on the substrate by an inkjet recording method at an ejection amount of 100% (40 pL, 360 × 360 dpi). Immediately after that, the printed substrate was dried for 2 minutes by a dryer at 100°C to obtain a printed article. Printing was performed using a print evaluation device jetXpert (available from imageXpert) equipped with an inkjet print head (available from SII Printek Inc., product number: RC1536) in air at a temperature of 25 ± 1°C and a relative humidity of 30 ± 5%.

### Evaluation method

### Adhesion

An adhesive tape (available from Nichiban Co., Ltd., Cellotape (trade name), No. 405, 24 mm wide) was attached to the solid image portion of each printed article under room temperature environment, allowed to stand for 1 minute, and then peeled off in the 180° direction. The evaluation portion was captured with a printer scanner with a black background, and image analysis software (Image Analyzer) was used to calculate peeling ratio (%) = area of the black portion/total area of the evaluation portions × 100. The peeling ratio (%) was rounded off to the nearest integer. From the obtained peeling ratio, the adhesion was evaluated based on the following evaluation criteria.

The adhesion evaluation results when a corona-treated PET film was used as the substrate are presented in Tables 1 and 2 as PET adhesion, and the adhesion evaluation results when a corona-treated OPP film was used as the substrate are presented in Tables 1 and 2 as OPP adhesion.

### Evaluation criteria

5: The peeling ratio of the printed image is 0%.
4: The peeling ratio of the printed image is from 1 to 20%.
3: The peeling ratio of the printed image is from 21 to 50%.
2: The peeling ratio of the printed image is from 51 to 75%.
1: The peeling ratio of the printed image is from 76 to 100%.

### Viscosity stability

The aqueous ink was placed in a glass bottle and stored for 4 weeks in a thermostat in which an inside temperature was 50°C, and the viscosity of the aqueous ink before and after storage was measured at a temperature of 25°C and a rotation speed of 10 rpm using an E-type viscometer. From the obtained viscosity, the viscosity stability was evaluated based on the following evaluation criteria. The results are presented in Tables 1 and 2.

### Evaluation criteria

5: The difference in viscosity before and after storage is less than 0.5 mPa·s.
4: The difference in viscosity before and after storage is 0.5 mPa·s or more and less than 1.0 mPa·s.
3: The difference in viscosity before and after storage is 1.0 mPa·s or more and less than 2.0 mPa·s.
2: The difference in viscosity before and after storage is 2.0 mPa·s or more and less than 3.0 mPa·s.
1: The difference in viscosity before and after storage is 3.0 mPa·s or more.

### Comprehensive evaluation

The total score for each test item was used as an index for the comprehensive evaluation.

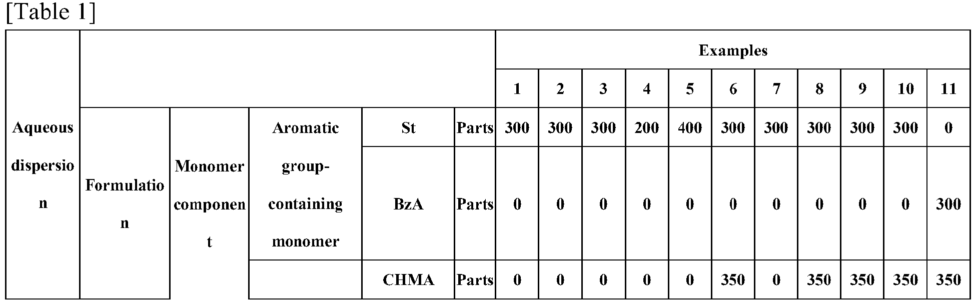

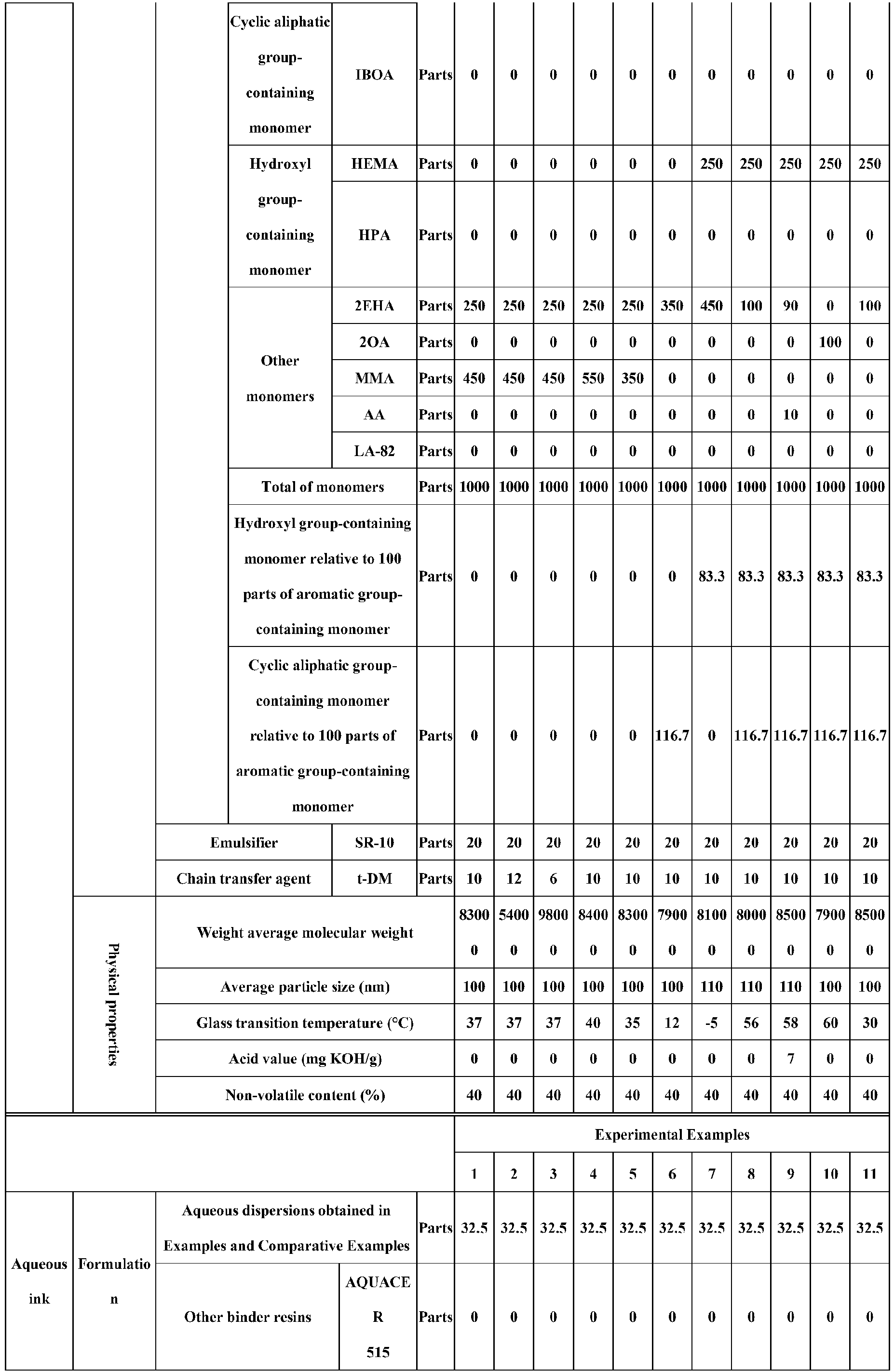

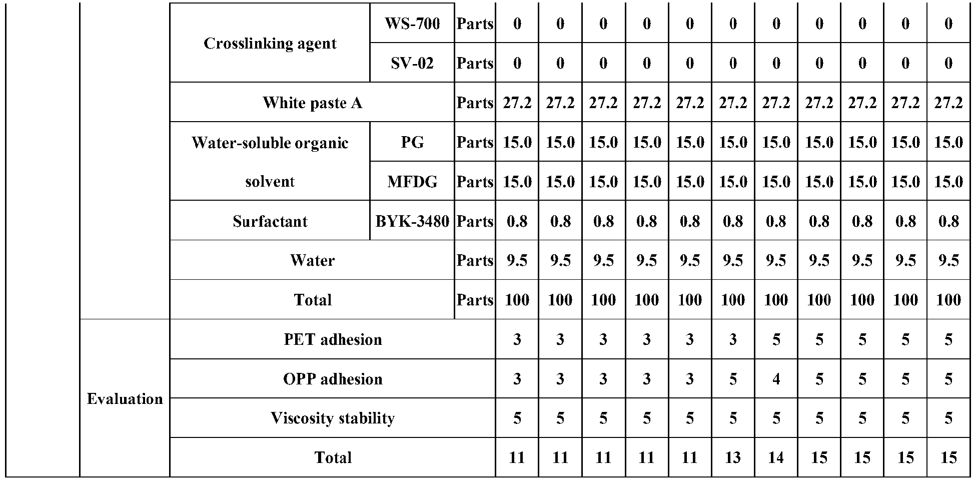

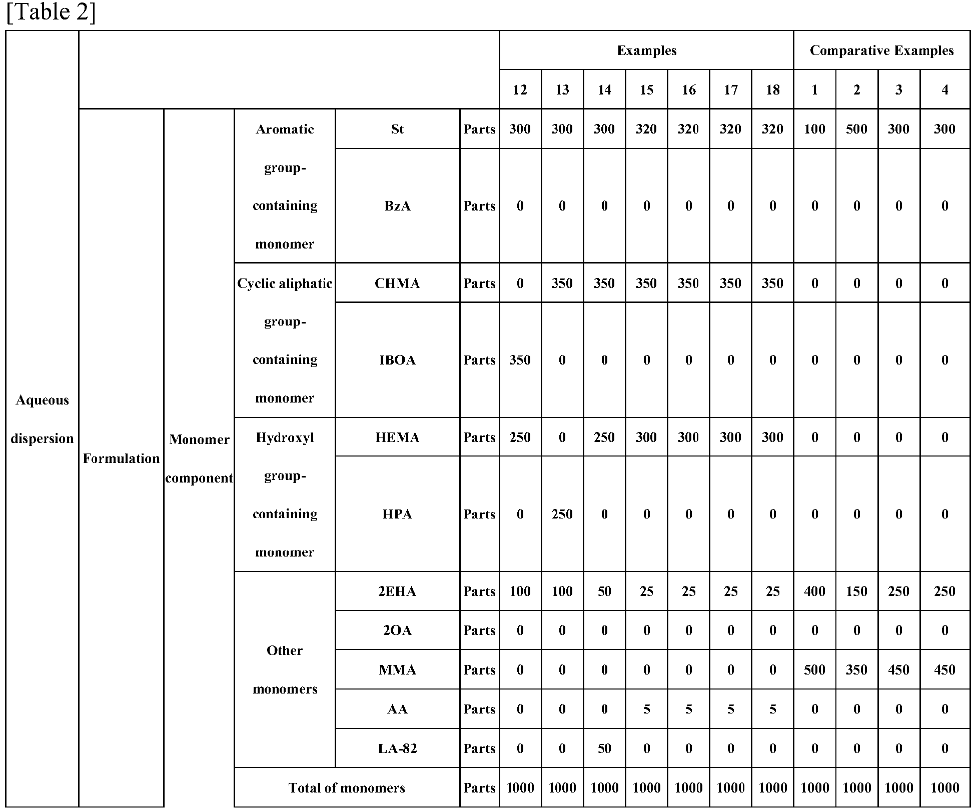

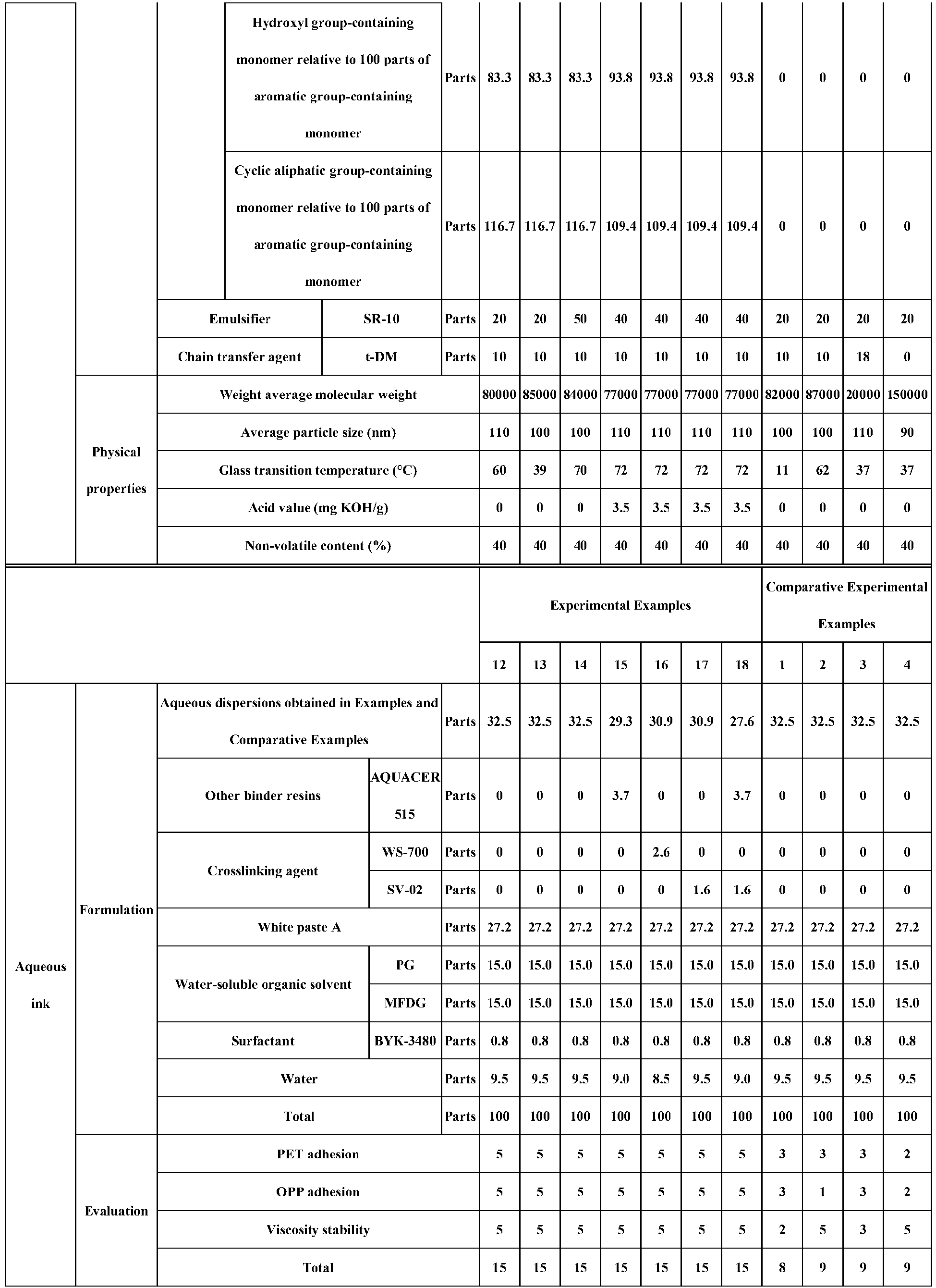

The abbreviations described in Tables 1 and 2 described above mean the following compounds.
St: Styrene
BzA: Benzyl acrylate
CHMA: Cyclohexyl methacrylate
IBOA: Isobornyl acrylate
HEMA: 2-Hydroxyethyl methacrylate
HPA: Hydroxypropyl acrylate
2EHA: 2-Ethylhexyl acrylate
2OA: 2-Octyl acrylate
MMA: Methyl methacrylate
AA: Acrylic acid
LA-82: 1,2,2,6,6-Pentamethyl-4-piperidyl methacrylate, ultraviolet stabilizer available from ADEKA, product name: ADEKA STAB LA-82
SR-10: Reactive emulsifier available from ADEKA, product name: ADEKA REASOAP SR-10
t-DM: tert-dodecyl mercaptan

From the results presented in Tables 1 and 2, it is found that the aqueous inks of Experimental Examples 1 to 18, which used the aqueous dispersions (Examples 1 to 18) containing the polymer particles composed of a polymer having from 18 to 42 mass% of the structural unit derived from the aromatic group-containing monomer and having a weight average molecular weight of from 50000 to 100000, can achieve both high adhesion to a PET film and an OPP film and good viscosity stability.

In particular, as compared with the aqueous ink of Comparative Experimental Example 1, which used the aqueous dispersion (Comparative Example 1) containing polymer particles composed of a polymer in which a content of the structural unit derived from the aromatic group-containing monomer was small, the viscosity stability of the aqueous inks of Experimental Examples 1 to 18, which used the aqueous dispersions (Examples 1 to 18) containing polymer particles composed of a polymer in which the above-described content was adjusted to from 18 to 42 mass%, was enhanced.

In addition, the aqueous ink of Comparative Experimental Example 2, which used the aqueous dispersion (Comparative Example 2) containing polymer particles composed of a polymer in which the content of the structural unit derived from the aromatic group-containing monomer was large, had insufficient adhesion to an OPP film, whereas the aqueous inks of Experimental Examples 1 to 18, which used the aqueous dispersions (Examples 1 to 18) containing polymer particles composed of a polymer in which the above-described content was adjusted to from 18 to 42 mass%, had high adhesion to both the substrates of a PET film and an OPP film.

In addition, as compared with the aqueous ink of Comparative Experimental Example 3, which used the aqueous dispersion (Comparative Example 3) containing polymer particles composed of a polymer with a small weight average molecular weight, the viscosity stability of the aqueous inks of Experimental Examples 1 to 18, which used the aqueous dispersions (Examples 1 to 18) containing polymer particles composed of a polymer in which the weight average molecular weight was adjusted to from 50000 to 100000, was enhanced.

In addition, as compared with the aqueous ink of Comparative Experimental Example 4, which used the aqueous dispersion (Comparative Example 4) containing polymer particles composed of a polymer with a large weight average molecular weight, the aqueous inks of Experimental Examples 1 to 18, which used the aqueous dispersions (Examples 1 to 18) containing polymer particles composed of a polymer in which the weight average molecular weight was adjusted to from 50000 to 100000, resulted in enhanced adhesion to both a PET film and an OPP film.

## Claims

1. An aqueous dispersion for ink, the aqueous dispersion comprising polymer particles comprising a polymer (A),
the polymer (A) containing from 18 to 42 mass% of a structural unit derived from an aromatic group-containing monomer, and
a weight average molecular weight of the polymer (A) being from 50000 to 100000.

2. The aqueous dispersion for ink according to claim 1, wherein the aromatic group-containing monomer is a monomer having: at least one benzene ring or naphthalene ring; and at least one polymerizable unsaturated group in a molecule.

3. The aqueous dispersion for ink according to claim 1, wherein the polymer (A) further contains a structural unit derived from a hydroxyl group-containing monomer, and
a content of the structural unit derived from a hydroxyl group-containing monomer is from 30 to 150 parts by mass per 100 parts by mass of the structural unit derived from an aromatic group-containing monomer.

4. The aqueous dispersion for ink according to claim 3, wherein the hydroxyl group-containing monomer is a monomer having at least one hydroxyl group and at least one (meth)acryloyl group in a molecule.

5. The aqueous dispersion for ink according to claim 1,
wherein the polymer (A) further contains a structural unit derived from a cyclic aliphatic group-containing monomer, and
a content of the structural unit derived from a cyclic aliphatic group-containing monomer is from 60 to 180 parts by mass per 100 parts by mass of the structural unit derived from an aromatic group-containing monomer.

6. The aqueous dispersion for ink according to claim 5,
wherein the cyclic aliphatic group-containing monomer is a monomer having at least one alicyclic hydrocarbon ring and at least one polymerizable unsaturated group in a molecule, and
the alicyclic hydrocarbon ring comprises a cycloalkyl group, an isobornyl group, or an adamantyl group.

7. The aqueous dispersion for ink according to claim 1, wherein a glass transition temperature of the polymer (A) is from -10 to 75°C.

8. The aqueous dispersion for ink according to claim 1, wherein an acid value of the polymer (A) is 10 mg KOH/g or less.

9. An aqueous ink, comprising: the aqueous dispersion for ink described in any of claims 1 to 8; and a colorant.

10. The aqueous ink according to claim 9, wherein the colorant comprises a white pigment.

11. A printed article, comprising a printed layer comprising the aqueous ink described in claim 9.

12. A method for producing an aqueous ink, the method comprising using the aqueous dispersion described in any of claims 1 to 8.
